# EUROPÄISCHE PATENTANMELDUNG

(11) **EP 4 505 904 A1**
(43) Veröffentlichungstag der Anmeldung: **12.02.2025**
(21) Anmeldenummer: 24193359.7
(22) Anmeldetag: 07.08.2024
(51) Int. Cl.: A47C 3/20, A47B 91/00, A47C 19/02, F16B 12/52, A47C 7/00, A47C 19/04

(54) **SOCKELFUSS FÜR MÖBEL**

(30) Priorität: 11.08.2023 AT 506472023
(71) Anmelder: ADA Möbelfabrik GmbH, 8184 Anger (AT)
(72) Erfinder: ROMEO, David, 8184 Anger (AT); WIEDERHOFER, Werner, 8184 Anger (AT); EITER, Gerald, 8184 Anger (AT)
(74) Vertreter: Gibler & Poth Patentanwälte KG

(57) **Zusammenfassung**

Bei einem Sockelfuß (1) für Möbel (24, 25), mit einem ersten Standbein (2) mit einer feststehenden ersten Standbeinlänge (3), wird vorgeschlagen, dass der Sockelfuß (1) ein zweites Standbein (4) mit einer feststehenden zweiten Standbeinlänge (5) und ein drittes Standbein (6) mit einer feststehenden dritten Standbeinlängte (7) aufweist, und dass die erste Standbeinlänge (3), die zweite Standbeinlänge (5) und die dritte Standbeinlänge (7) jeweils unterschiedlich zueinander sind.

## Beschreibung

Die Erfindung betrifft einen Sockelfuß für Möbel gemäß dem Oberbegriff des Patentanspruches 1.

Möbel, die angeschafft werden, werden in den meisten Fällen über einen sehr langen Zeitraum von vielen Jahrzehnten verwendet. Bei der Auswahl eines Möbelstückes sind oftmals die aktuellen Moden relevant. Die Bauhöhe, welche in der Regel wesentlich von der Höhe bzw. Länge der Sockelfuß abhängt wird oftmals nach persönlichem Geschmack bzw. der gegenwärtigen Mode gewählt.

Bei Sitzmöbeln und/oder Betten wir die Stitz- bzw. Schlafhöhe nach optischen Kriterien und körperlichen Fähigkeiten ausgewählt. In jungen Jahren bestehend bei den meisten Menschen nur geringe körperliche Einschränkungen, welche für das, sich hinsetzten oder aufstehen relevant wären. Dies ändert sich jedoch während des Älterwerdens. Insbesondere Betten werden in den meisten Fällen in jungen Jahren erworben und dann bis zum Tode der betreffenden Person verwendet. Dies sind Zeiträume der Verwendung von typischerweise 30 bis 50 Jahren. In dieser Zeit kann es, aus optischen aber vor allem gesundheitlichen Problemen, erforderlich sein, dass die Sitz- bzw. Liegenfläche eines Bettes bzw. eins Sofas auf einer gewissen Mindesthöhe angeordnet ist, da ansonsten das Hinsetzten körperliche Schmerzen verursacht und ein Aufstehen ohne fremde Hilfe nicht möglich ist.

Ein vollständiger Austausch eines Möbelstückes ist sehr kostenintensiv und wird von den meisten Menschen, insbesondere älteren Menschen, auch aus emotionalen Gründen abgelehnt. Die Benutzer haben sich an gewisse Dinge gewöhnt und wollen sich nicht von diesen trennen. Das Ersetzen von Sockelfüßen alter Möbelstücke ist oftmals nachteilig. Dies ist ein aufwendiger handwerklicher Aufwand und verändert das Design des Möbelstückes und dessen optische Wirkung auf den Beobachter. Sockelfüße mit altem Design sind in den meisten Fällen nicht mehr erhältlich, sodass optisch gänzlich andere Sockelfüße verwendet werden müssen. Weiters müssen die Unterseiten der Möbel mit anderen Befestigungsöffnungen versehen werden, damit die neuen Füße befestigt werden können. Dies ist ein aufwändiger Prozess, der die Auswahl und Akzeptanz neuer Füße sowie deren Montage umfasst.

Dies wird von vielen Menschen abgelehnt. Dies führt dazu, dass bestehende körperliche Probleme wachsen.

Manche Möbelstücke weisen eine Vorrichtung zur Feinjustage der Ausrichtung eines Möbelstückes aus. Dies ist oftmals ein Fortsatz, dessen Position mittels eines integrierten Gewindes eingestellt werden kann. Eine derartige Vorrichtung dient dazu gewissen Unregelmäßigkeiten des Fußbodens auszugleichen, sind jedoch nicht in der Lage eine nennbare bzw. tatsächliche Höhenverstellung durchzuführen, und zudem sehr instabil.

Aufgabe der Erfindung ist es daher einen Sockelfuß der eingangs genannten Art anzugeben, mit welchem die genannten Nachteile vermieden werden können, mit welchem die Höhe eines Möbelstückes, insbesondere die Sitzhöhe eines Sitz- und/oder Liegemöbels, mit geringem Aufwand an unterschiedliche Anwendungen bzw. medizinische Erfordernisse angepasst werden kann.

Erfindungsgemäß wird dies durch die Merkmale des Patentanspruches 1 erreicht.

Dadurch kann die Sitzhöhe eines Sitz- und/oder Liegemöbels, mit geringem Aufwand an unterschiedliche Anwendungen bzw. medizinische Erfordernisse angepasst werden kann. Dadurch kann die Sitzhöhe eines Sitz- und/oder Liegemöbels an die körperlichen Veränderungen aufgrund zunehmenden Alters und/oder Krankheiten einfach angepasst werden. Dadurch können Schmerzen des Benutzers beim Hinsetzten bzw. Aufstehen reduziert werden. Bei diesen Anpassungen wird die optische Erscheinung des betreffenden Möbelstückes nicht verändert, und daher vom betreffen Benutzer überhaupt erst akzeptiert. Es ist zudem kein Auswahlprozess erforderlich, welcher betreffende Personen psychisch beanspruchen würde. Die Veränderung der Sitzhöhe ist weiters mit geringem technischem Aufwand möglich, da die Sockelfüße lediglich abgenommen, gedreht und wieder mit denselben Befestigungsmitteln an denselben Positionen montiert werden. Dazu müssen keine neuen Löcher gebohrt werden und die Anpassung der Sitzhöhe kann direkt im betreffenden Raum durchgeführt werden, ohne Staub bzw. Schmutz zu verursachen. Die Anpassung der Sitzhöhe kann zudem von Heimwerkern durchgeführt werden, weshalb es nicht notwendig ist Tischler zu bestellen, welche zudem noch in die Privatsphäre eindringen würden. Durch die Einfachheit der Anpassung der Sitzhöhe wird diese mit einer hohen Wahrscheinlichkeit durchgeführt. Dadurch werden die körperlichen und mentalen Schmerzen von Menschen reduziert und deren Wohlempfinden gesteigert.

Die Erfindung betrifft weiters ein Möbel gemäß dem Patentanspruch 11 mit wenigstens drei erfindungsgemäßen Sockelfüßen.

Ein solches Möbel weist die vorstehend genannten Vorteile auf.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine axonometrische Ansicht einer ersten bevorzugten Ausführungsform eines Sockelfußes;
Fig. 2 den Sockelfuß gemäß Fig. 1 mit Abdeckungen in axonometrische Ansicht;
Fig. 3 einen Seitenriss der Sockelfuß gemäß Fig. 2;
Fig. 4 einen Aufriss der Sockelfuß gemäß Fig. 2;
Fig. 5 einen Grundriss der Sockelfuß gemäß Fig. 2;
Fig. 6 eine erste bevorzugte Ausführungsform eines Möbels;
Fig. 7 eine Detailansicht einer zweiten bevorzugten Ausführungsform eines Möbels im Aufriss;
Fig. 8 die Detailansicht gemäß Fig. 7 im Grundriss; und
Fig. 9 eine dritte bevorzugte Ausführungsform eines Möbels.

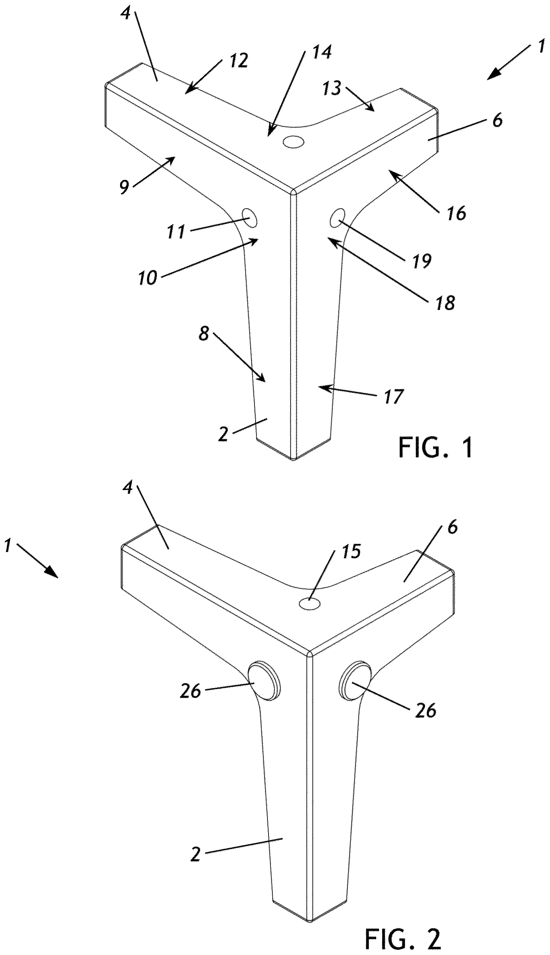

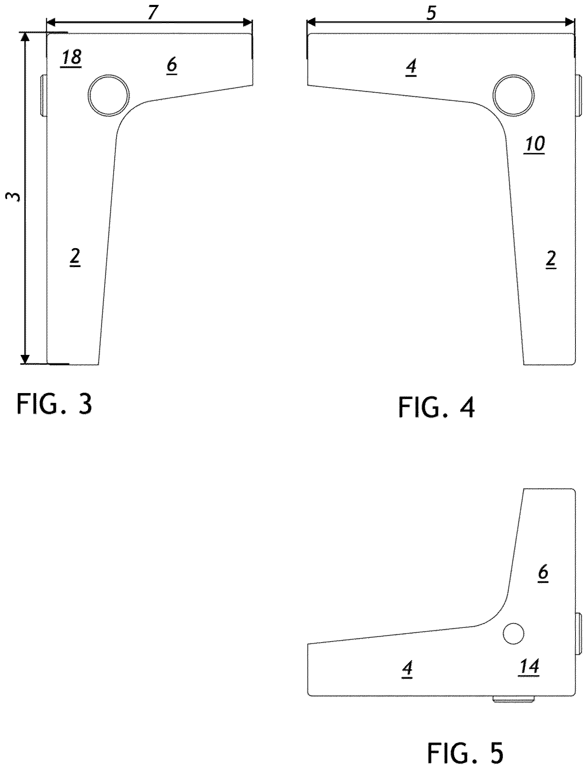

Die Fig. 1 bis 9 zeigen jeweils ein Sockelfuß 1 für Möbel 24, 25 bzw. eine Möbel mit einem Sockelfuß 1, welcher Sockelfuß 1 einen ersten Standbein 2 mit einer feststehenden ersten Standbeinlänge 3 aufweist, wobei der Sockelfuß 1 ein zweites Standbein 4 mit einer feststehenden zweiten Standbeinlänge 5 und ein drittes Standbein 6 mit einer feststehenden dritten Standbeinlängte 7 aufweist, und dass die erste Standbeinlänge 3, die zweite Standbeinlänge 5 und die dritte Standbeinlänge 7 jeweils unterschiedlich zueinander sind.

Dadurch kann die Sitzhöhe eines Sitz- und/oder Liegemöbels 25, 24, mit geringem Aufwand an unterschiedliche Anwendungen bzw. medizinische Erfordernisse angepasst werden kann. Dadurch kann die Sitzhöhe eines Sitz- und/oder Liegemöbels 25, 24 an die körperlichen Veränderungen aufgrund zunehmenden Alters und/oder Krankheiten einfach angepasst werden. Dadurch können Schmerzen des Benutzers beim Hinsetzten bzw. Aufstehen reduziert werden. Bei diesen Anpassungen wird die optische Erscheinung des betreffenden Möbelstückes nicht verändert, und daher vom betreffen Benutzer überhaupt erst akzeptiert. Es ist zudem kein Auswahlprozess erforderlich, welcher betreffende Personen psychisch beanspruchen würde. Die Veränderung der Sitzhöhe ist weiters mit geringem technischem Aufwand möglich, da die Sockelfüße 1 lediglich abgenommen, gedreht und wieder mit denselben Befestigungsmitteln an denselben Positionen montiert werden. Dazu müssen keine neuen Löcher gebohrt werden und die Anpassung der Sitzhöhe kann direkt im betreffenden Raum durchgeführt werden, ohne Staub bzw. Schmutz zu verursachen. Die Anpassung der Sitzhöhe kann zudem von Heimwerkern durchgeführt werden, weshalb es nicht notwendig ist Tischler zu bestellen, welche zudem noch in die Privatsphäre eindringen würden. Durch die Einfachheit der Anpassung der Sitzhöhe wird diese mit einer hohen Wahrscheinlichkeit durchgeführt. Dadurch werden die körperlichen und mentalen Schmerzen von Menschen reduziert und deren Wohlempfinden gesteigert.

Der gegenständliche Sockelfuß 1 ist für die Verwendung bei Möbelstücken vorgesehen. Dabei ist vorgesehen, dass eine Mehrzahl an Sockelfüßen 1 an einer Unterseite eines Möbelstückes 24, 25 befestig sind, und diese das Möbelstück 24, 25 tragen. Der Sockelfuß 1 ist daher lasttragend. Bevorzugte Arten von Möbelstücken 24, 25 sind Sitzmöbel 25 und/oder Betten 24.

Der Sockelfuß 1 ist bevorzugt aus Holz und/oder Metall hergestellt.

Der Sockelfuß 1 weist ein erstes Standbein 2, ein zweites Standbein 4 und ein drittes Standbein 6 auf. Insbesondere weist der Sockelfuß 1 keine weiteren Zusatzstandbeine auf.

Der Sockelfuß 1 kann in drei unterschiedlichen Lagen bzw. Stellungen an dem Möbelstück 24, 25 befestigt werden.

Die drei Standbeine 2, 4, 6 sind miteinander verbunden. Dabei sind jeweils Enden bzw. Verbindungsendbereiche der drei Standbeine 2, 4, 6 miteinander verbunden. Bei dieser Verbindung handelt es sich bevorzugt um eine starre Verbindung. Die drei Standbeine 2, 4, 6 sind daher nicht schwenkbar, klappbar bzw. kippbar zueinander. Durch eine starre Verbindung wird die Verwendung des Sockelfußes 1 vereinfacht. Weiters ist eine starre Verbindung wesentlich einfacher herstellbar, langlebiger und auch nach langer Zeit noch sicher einsetzbar.

Die, den Verbindungsendbereichen abgewandten Enden der Standbeine 2, 4, 6 sind zum Bodenkontakt vorgesehen, und weisen bevorzugt einen vorgebbaren Reibungswiderstand auf um ein Verrutschen um Fußboden zu vermeiden. Diese Enden können auch als Bodenkontaktenden bezeichnet werden.

Die einzelnen Standbeine 2, 4, 6 sind jeweils in vorgebbaren Winkeln α, β, γ zueinander angeordnet. Diese Winkel α, β, γ beeinflussen, neben der optischen Erscheinung, auch die Kraftübertragen bzw. beeinflussen diese Ausrichtung und Stärke eines Moments. Bevorzugt ist vorgesehen, dass ein erster Winkel α zwischen dem ersten Standbein 2 und dem zweiten Standbein 4 zwischen 70° und 110°, insbesondere zwischen 80° und 100°, vorzugsweise im Wesentlichen 90°, beträgt.

Insbesondere ist weiters vorgesehen, dass ein zweiter Winkel β zwischen dem zweiten Standbein 4 und dem dritten Standbein 6 zwischen 70° und 110°, insbesondere zwischen 80° und 100°, vorzugsweise im Wesentlichen 90°, beträgt.

Ein dritter Winkel γ, welcher zwischen dem dritten Standbein 6 und dem ersten Standbein 2 liegt, beträgt vorzugsweise zwischen 70° und 110°, insbesondere zwischen 80° und 100°, vorzugsweise im Wesentlichen 90°.

Diese Winkelbereiche haben sich hinsichtlich des Tragens der Lasten sowie der optischen Akzeptanz seitens der Nutzer als vorteilhaft erwiesen.

Die einzelnen Winkel α, β, γ können jeweils unterschiedlich ausgewählt werden. Bevorzugt ist vorgesehen, dass der erste Winkel α im Wesentlichen gleich dem zweiten Winkel β und im Wesentlichen gleich dem dritten Winkel γ ist. Dadurch kann erreicht werden, dass das jeweils als tragender Fortsatz genutzte Standbein 2, 4, 6 jeweils im gleichen Winkel α, β, γ dem Möbelstück gegenüber angeordnet ist, und sich weder die Optik noch die, zu tragende resultierende Kraft wesentlich ändern.

Bevorzugt ist vorgesehen, dass der erste Winkel α, der zweite Winkel β und der dritte Winkel γ jeweils im Wesentlichen 90° betragen. Die drei Standbeine 2, 4, 6 bilden dabei ein kartesisches Koordinatensystem aus, wobei - gemäß der Darstellung in den Fig 1 bis 5 - das erste Standbein 2 in der negativen Z-Richtung, das zweite Standbein 4 in die Y-Richtung und das dritte Standbein 6 in die X-Richtung verlaufen.

Die Standbeine 2, 4, 6 können unterschiedliche Formen und unterschiedliche Querschnitte aufweisen. So können die Standbeine 2, 4, 6 zylindrisch oder Kegelstumpfartige mit runden Querschnitten ausgebildet sind.

Bevorzugt ist vorgesehen, dass das erste Standbein 2 eine plane erste Außenfläche 8 aufweist und das zweite Standbein 4 eine plane zweite Außenfläche 9 aufweist. Die erste Außenfläche 8 und die zweite Außenfläche 9 sind gemeinsam in einer ersten Ebene angeordnet bzw. bilden diese eine erste Ebene aus. Dabei bilden die erste Außenfläche 8 und die zweite Außenfläche 9 gemeinsam eine erste, plane Kontaktfläche 10 zur Befestigung des Sockelfußes 1 aus. Dadurch ist keine separate Kontaktfläche erforderlich, und die zur Verfügung stehenden Standbeine 2, 4, 6 können neben deren Zweck das Möbelstück 24, 25 zu tragen und auf eine bestimmte Höhe zu heben, weiters auch die Position des Sockelfußes 1 selbst sichern und durch die, aus zwei Standbeinen 2, 4 gebildete Kontaktfläche 10 auch einem Verkippen bzw. einem Ausbrechen des Sockelfußes 1 wirkungsvoll entgegenstehen.

Analog zur Ausbildung der ersten Kontaktfläche 10 ist weiters bevorzugt vorgesehen, dass das zweite Standbein 4 eine plane dritte Außenfläche 12 aufweist, dass das dritte Standbein 6 eine plane vierte Außenfläche 13 aufweist, und dass die dritte Außenfläche 12 und die vierte Außenfläche 13 gemeinsam eine zweite Kontaktfläche 14 zur Befestigung des Sockelfußes 1 ausbilden.

In Weiterbildung der bevorzugten Ausbildung der ersten und der zweiten Kontaktflächen 10, 14 ist weiters bevorzugt vorgesehen, dass das dritte Standbein 6 eine plane fünfte Außenfläche 16 aufweist, dass das erste Standbein 2 eine plane sechste Außenfläche 17 aufweist, und dass die fünfte Außenfläche 16 und die sechste Außenfläche 17 gemeinsam eine dritte Kontaktfläche 18 zur Befestigung des Sockelfußes 1 ausbilden.

Unter Beibehaltung der bevorzugt vorgesehenen planen Außenflächen 10, 14, 18 können die einzelnen Standbeine 2, 4, 6 unterschiedliche Querschnitte aufweisen. Gegenständlich weisen die Standbeine 2, 4, 6 bevorzugt im Wesentlichen dreieckige Querschnitte auf, wobei jedoch auch andere Querschnittsformen vorgesehen sein können.

Bei den bevorzugten Ausführungsformen nehmen die Querschnittsflächen von den Verbindungsendbereichen zu den Bodenkontaktenden hin ab.

Wie bereits dargelegt, dienen die Kontaktflächen der Befestigung des Sockelfußes 1 an einem Möbelstück 24, 25. Es ist daher bevorzugt vorgesehen, dass in der ersten Kontaktfläche 10 wenigstens eine erste Befestigungseinrichtung 11 angeordnet ist. Entsprechend ist weiters bevorzugt vorgesehen, dass in der zweiten Kontaktfläche 14 wenigstens eine zweite Befestigungseinrichtung 15 angeordnet ist, und/oder dass in der dritten Kontaktfläche 18 wenigstens eine dritte Befestigungseinrichtung 19 angeordnet ist. Die erste, zweite und/oder dritte Befestigungseinrichtung 11, 15, 19 können dabei unterschiedliche Vorrichtungen bzw. Einrichtungen umfassen, wie insbesondere Durchgangsöffnungen oder Sacklöcher mit Innengewinde. Es können jedoch auch Hebel-Klemmsysteme vorgesehen sein.

Wie in den Fig. 2 bis 5 dargestellt, können ungenutzte Befestigungseinrichtung mit Abdeckungen 26 verschlossen sein.

Es ist vorgesehen, dass ein jedes der Standbeine 2, 4, 6 jeweils eine feststehende, daher nicht einziehbare und auch nicht verlängerbare Standbeinlänge 3, 5, 7 aufweist. Das erste Standbein 2 weist eine erste Standbeinlänge 3 auf. Das zweite Standbein 4 weist eine zweite Standbeinlänge 5 auf. Das dritte Standbein 6 weist eine dritte Standbeinlänge 7 auf.

Es ist ebenfalls vorgesehen, dass die erste Standbeinlänge 3, die zweite Standbeinlänge 5 und die dritte Standbeinlänge 7 jeweils unterschiedlich zueinander sind. Die erste Standbeinlänge 3 unterscheidet sich daher von der zweiten Standbeinlänge 5. Die erste Standbeinlänge 3 ist weiters ungleich der dritten Standbeinlänge 7, und die zweite Standbeinlänge 5 ist anders als die dritte Standbeinlänge 7.

Die Standbeinlängen 3, 5, 7 können sich in unterschiedlicher Weise voneinander unterscheiden. Bevorzugt ist vorgesehen, dass die zweite Standbeinlänge 5 zwischen 120% und 140%, insbesondere im Wesentlichen 130%, der dritten Standbeinlänge 7 beträgt. Wenn beispielsweise die dritte Standbeinlänge 7 200 mm beträgt und die zweite Standbeinlänge 5 130% der dritten Standbeinlänge 7 beträgt, dann ist die zweite Standbeinlänge 5 260mm lang.

Weiters ist bevorzugt vorgesehen, dass die erste Standbeinlänge 3 zwischen 150% und 170%, insbesondere im Wesentlichen 160%, der dritten Standbeinlänge 7 beträgt. Die erste Standbeinlänge 3 ist daher insbesondere um 60% länger als die dritte Standbeinlänge 7. Bei der dritten Standbeinlänge 7 von 200 mm und einer ersten Standbeinlänge 3, welche 160% der dritten Standbeinlänge 7 beträgt, was einer Verlängerung um 60% entspricht, beträgt die erste Standbeinlänge 3 gleich 320 mm.

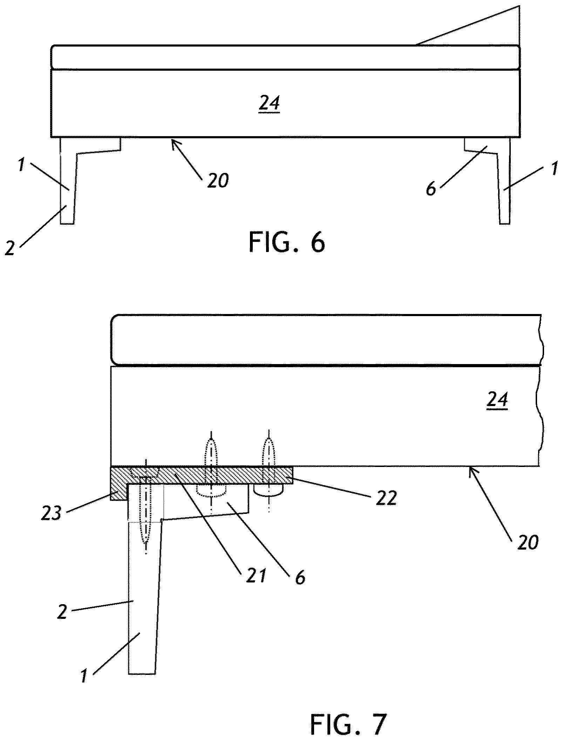

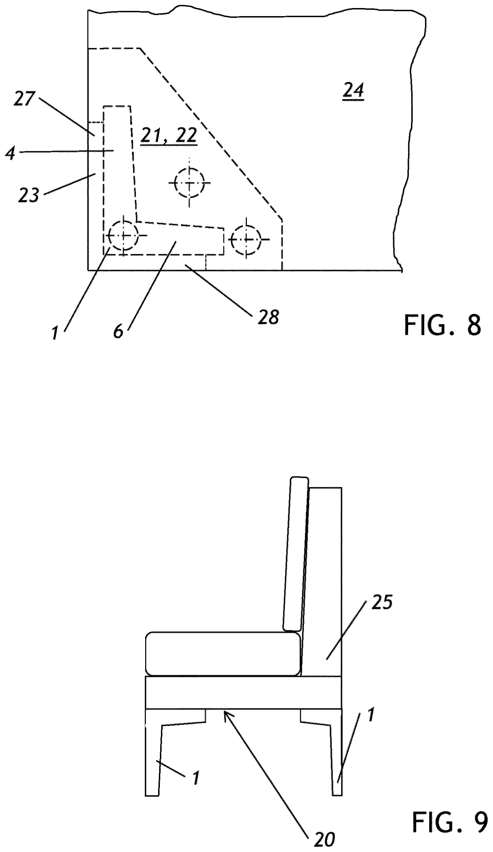

Die Fig. 6 und 8 zeigen jeweils bevorzugte Möbelstücke mit Sockelfüßen 1. Fig. 6 zeigt eine Bett 24 und Fig. 9 einen Stuhl 25 bzw. einen Sessel oder ein Sofa.

Möbel 24, 25 sind Gegenstände und weisen - in der vorgesehen Betriebslage - eine Unterseite 20 auf. Die Unterseite 20 umfasst durchgehend geschlossene Flächen, Flächen mit Unterbrechungen sowie die Unterseite 20 eines Rahmens des betreffenden Möbelstücks 24, 25. Insbesondere Betten weisen keine geschlossenen Unterseiten 20 auf. Dabei bildet die Unterseite 20 des Rahmen die Unterseite 20 aus.

Es ist vorgesehen, dass an zumindest drei, insbesondere zumindest vier, Positionen, insbesondere Eckpositionen, der Unterseite 20 des Möbels 24, 25 jeweils ein gegenständlicher Sockelfuß 1 wenigstens mittelbar befestigt ist. Dabei können die Sockelfüße 1 in drei unterschiedlichen Ausrichtungen befestigt werden.

Die einzelnen Sockelfüße 1 können jeweils mit unterschiedlichen Standbeinen 2, 4, 6 mit unterschiedlichen Standbeinlängen 3, 5, 7 an der Unterseite 20 befestigt werden. Dadurch kann ein Abfall bzw. eine Schräge am Fußboden ausgeglichen werden. Insbesondere in alten Gebäuden kommt es dazu, dass der Fußboden sich über Jahrhunderte verzogen hat und nicht mehr horizontal verläuft. So weisen die Fußböden in der 200 Jahre alten Gebäuden oftmals Winkel von 10° bis 15° zur Horizontalen auf, sodass ein herkömmliches Bett nur durch Unterlage einzelner Hilfsmittel genutzt werden kann. Insbesondere ist jedoch vorgesehen, dass von jedem der Sockelfüße 1 jeweils ein Standbein 2, 4, 6 mit denselben Standbeinlängen 3, 5, 7 von der Unterseite 20 weg ragen.

Es ist möglich einen Sockelfuß 1 direkt bzw. unmittelbar an der Unterseite 20 des Möbels 24, 25 zu befestigen. Es hat sich jedoch als vorteilhaft erwiesen, wenn zwischen der Unterseite 20 und dem Sockelfuß 1 eine Zwischenplatte 21 angeordnet ist. Dadurch ist eine stabilere und langlebigere Befestigung des Sockelfußes 1 möglich. Die Fig. 7 und 8 zeigen eine derartige Anordnung.

Bei der Verwendung einer Zwischenplatte 21 ist insbesondere vorgesehen, dass der Sockelfuß 1 an der Zwischenplatte 21 befestigt ist, und dass die Zwischenplatte 21 an der Unterseite 20 des Möbels 24, 25 befestigt ist. Wie in Fig. 7 gezeigt, kann dadurch der Sockelfuß 1 mittels einer längeren Schraube, welche in das erste Standbein 2 eindringt an der Zwischenplatte 21 befestigt werden. Die Zwischenplatte 21 wiederum kann mittels mehrerer Schrauben an der Unterseite 20 des Möbelstückes 24, 25 befestigt werden. Dadurch kann eine sehr feste Verbindung zwischen Sockelfuß 1 und Möbel 24, 25 erreicht werden.

Die Zwischenplatte 21 kann unterschiedliche Formen aufweisen, wie etwa eine durchgängig flache Scheibe oder Platte. Bevorzugt ist vorgesehen, dass die Zwischenplatte 21 eine im Wesentlichen ebene Grundplatte 22 und zumindest einen Auflagerfortsatz 23 aufweist. Wie in Fig. 7 gezeigt, ragt der Auflagerfortsatz 23 von der Unterseite 20 des Möbels 24, 25 weg, daher in Betriebslage nach unten. Der Auflagerfortsatz 23 verläuft dabei in dieselbe Richtung wie das lasttragende Standbein 2, 4, 6. Der Auflagerfortsatz 23 ist bevorzugt L-Förmig ausgebildet. Bevorzugt und wie in Fig. 8 ersichtlich, sind die beiden Schenkel 27, 28 des Auflagerfortsatzes 23 kürzer als die Standbeine 2, 4, 6. Fig. 8 stellt dabei einen Grundriss der Detailansicht gemäß Fig. 7 dar, wobei die, an der Unterseite 20 angeordneten, und nicht sichtbaren Teile strichliert dargestellt sind.

Die Grundplatte 22 und der Auflagerfortsatz 23 können einstückig ausgebildet sein. Bevorzugt ist der Auflagerfortsatz 23 ein Bauteil, welches an der Grundplatte 22 befestigt ist.

Der Sockelfuß 1 ist derart an der Zwischenplatte 21 befestigt ist, dass zwei der Standbeine 2, 4, 6 an dem Auflagerfortsatz 23 anliegen, während einer der Standbeine 2, 4, 6 von der Grundplatte 22 weg rangt und dass Auflager für das Möbelstück 24, 25 bildet. Bei der dargestellten Ausführungsform gemäß den Fig. 7 und 8 ist das erste Standbein 2 lasttragend, während das zweite Standbein 4 und das dritte Standbein 6 an der Grundplatte sowie dem Auflagerfortsatz 23 anliegen.

Durch den seitlichen Kontakt zweier Standbeine 2, 4, 6 an den Schenkel 27, 28 ist ein sicherer Verdrehschutz des Sockelfußes 1 in beide potentielle Drehrichtungen gegeben.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Ein "im Wesentlichen" in Verbindung mit einem Zahlenwert mitumfasst eine Toleranz von ± 10% um den angegebenen Zahlenwert, sofern es sich aus dem Kontext nicht anders ergibt.

Bei Wertebereichen sind die Endpunkte mitumfasst, sofern es sich aus dem Kontext nicht anders ergibt.

## Patentansprüche

1. Sockelfuß (1) für Möbel (24, 25), mit einem ersten Standbein (2) mit einer feststehenden ersten Standbeinlänge (3), **dadurch gekennzeichnet, dass** der Sockelfuß (1) ein zweites Standbein (4) mit einer feststehenden zweiten Standbeinlänge (5) und ein drittes Standbein (6) mit einer feststehenden dritten Standbeinlängte (7) aufweist, und dass die erste Standbeinlänge (3), die zweite Standbeinlänge (5) und die dritte Standbeinlänge (7) jeweils unterschiedlich zueinander sind.

2. Sockelfuß (1) nach Anspruch 1, **dadurch gekennzeichnet, dass** das erste Standbein (2), das zweite Standbein (4) und das dritte Standbein (6) starr miteinander verbunden sind.

3. Sockelfuß (1) nach Anspruch 1 oder 2, **dadurch gekennzeichnet, dass** die zweite Standbeinlänge (5) zwischen 120% und 140%, insbesondere im Wesentlichen 130%, der dritten Standbeinlänge (7) beträgt.

4. Sockelfuß (1) nach einem der Ansprüche 1 bis 3, **dadurch gekennzeichnet, dass** die erste Standbeinlänge (3) zwischen 150% und 170%, insbesondere im Wesentlichen 160%, der dritten Standbeinlänge (7) beträgt.

5. Sockelfuß (1) nach einem der Ansprüche 1 bis 4, **dadurch gekennzeichnet, dass** das erste Standbein (2) eine plane erste Außenfläche (8) aufweist, dass das zweite Standbein (4) eine plane zweite Außenfläche (9) aufweist, und dass die erste Außenfläche (8) und die zweite Außenfläche (9) gemeinsam eine erste Kontaktfläche (10) zur Befestigung des Sockelfußes (1) ausbilden.

6. Sockelfuß (1) nach Anspruch 5, **dadurch gekennzeichnet, dass** in der ersten Kontaktfläche (10) wenigstens eine erste Befestigungseinrichtung (11) angeordnet ist.

7. Sockelfuß (1) nach einem der Ansprüche 1 bis 6, **dadurch gekennzeichnet, dass** das zweite Standbein (4) eine plane dritte Außenfläche (12) aufweist, dass das dritte Standbein (6) eine plane vierte Außenfläche (13) aufweist, und dass die dritte Außenfläche (12) und die vierte Außenfläche (13) gemeinsam eine zweite Kontaktfläche (14) zur Befestigung des Sockelfußes (1) ausbilden.

8. Sockelfuß (1) nach Anspruch 7, **dadurch gekennzeichnet, dass** in der zweiten Kontaktfläche (14) wenigstens eine zweite Befestigungseinrichtung (15) angeordnet ist.

9. Sockelfuß (1) nach einem der Ansprüche 1 bis 8, **dadurch gekennzeichnet, dass** das dritte Standbein (6) eine plane fünfte Außenfläche (16) aufweist, dass das erste Standbein (2) eine plane sechste Außenfläche (17) aufweist, und dass die fünfte Außenfläche (16) und die sechste Außenfläche (17) gemeinsam eine dritte Kontaktfläche (18) zur Befestigung des Sockelfußes (1) ausbilden.

10. Sockelfuß (1) nach Anspruch 9, **dadurch gekennzeichnet, dass** in der dritten Kontaktfläche (18) wenigstens eine dritte Befestigungseinrichtung (19) angeordnet ist.

11. Möbel (24, 25) mit einer Unterseite (20), **dadurch gekennzeichnet, dass** an zumindest drei, insbesondere zumindest vier, Positionen, insbesondere Eckpositionen, der Unterseite (20) jeweils ein Sockelfuß (1) nach einem der Ansprüche 1 bis 10 wenigstens mittelbar befestigt ist.

12. Möbel (24, 25) nach Anspruch 11, **dadurch gekennzeichnet, dass** von jedem der Sockelfüße (1) jeweils Standbeine (2, 4, 6) mit denselben Standbeinlängen (3, 5, 7) von der Unterseite (20) weg ragen.

13. Möbel (24, 25) nach Anspruch 11 oder 12, **dadurch gekennzeichnet, dass** zwischen der Unterseite (20) und dem Sockelfuß (1) eine Zwischenplatte (21) angeordnet ist.

14. Möbel (24, 25) nach Anspruch 13, **dadurch gekennzeichnet, dass** der Sockelfuß (1) an der Zwischenplatte (21) befestigt ist, und dass die Zwischenplatte (21) an der Unterseite (20) befestigt ist.

15. Möbel nach Anspruch 13 oder 14, **dadurch gekennzeichnet, dass** die Zwischenplatte (21) eine im Wesentlichen ebene Grundplatte (22) und zumindest einen Auflagerfortsatz (23) aufweist, und dass der Auflagerfortsatz (23) an einer Seitenkante des Möbels (24, 25) anliegt.
